# EUROPÄISCHE PATENTSCHRIFT

(11) **EP 2 789 818 B1**
(45) Veröffentlichungstag und Bekanntmachung des Hinweises auf die Patenterteilung: **12.10.2016**
(21) Anmeldenummer: 14153193.9
(22) Anmeldetag: 30.01.2014
(51) Int. Cl.: F01N 3/20, F01N 3/28, F01N 5/02, F01K 17/04, F01K 23/06, F01K 23/10, F01K 25/10

(54) **Antriebssystem**
Drive system
Système d'entraînement

(30) Priorität: 12.04.2013 CH 7702013
(43) Veröffentlichungstag der Anmeldung: 15.10.2014
(73) Patentinhaber: Liebherr Machines Bulle SA, 1630 Bulle (CH)
(72) Erfinder: Dr. Seba, Bouzid, 1636 Broc (CH); Dr. Vonarb, Régis, 1635 La Tour de Treme (CH); Dettmann, Tobias, 19303 Rüterberg (DE); Engeter, Daniel, 90411 Nürnberg (DE)
(74) Vertreter: Laufhütte, Dieter

(56) Entgegenhaltungen:
- WO-A1-2012/025776
- DE-A1-102011 100 650
- US-B1- 7 469 540

## Beschreibung

Die vorliegende Erfindung betrifft ein Antriebssystem mit einem Verbrennungsmotor und einem Energierückgewinnungssystem zur Rückgewinnung von Energie aus der Abwärme des Verbrennungsmotors. Insbesondere weist das Energierückgewinnungssystem dabei einen Fluidkreislauf mit einer Pumpe, einem Wärmetauscher und einem Expander auf.

Die WO 2012/025776 A1 offenbart eine Motoranordnung mit einem Wäremrückgewinnungskreislauf und einer Abgasnachbehandlung. Dabei offenbart diese Druckschrift alle Merkmale des Oberbegriffs des Anspruchs 1.

Ein solches Antriebssystem ist aus der EP 2 527 635 A2 bekannt, deren Inhalt zum Gegenstand der vorliegenden Anmeldung gemacht wird.

Aufgabe der vorliegenden Erfindung ist es, ein solches Antriebssystem weiter zu entwickeln.

Diese Aufgabe wird erfindungsgemäß durch ein Antriebssystem gemäß den Ansprüchen 1, 8 oder 9 gelöst.

Das erfindungsgemäße Antriebssystem umfasst dabei in einem ersten Aspekt einen Verbrennungsmotor und ein Energierückgewinnungssystem zur Rückgewinnung von Energie aus der Abwärme des Verbrennungsmotors, wobei das Energierückgewinnungssystem einen Fluidkreislauf mit einer Pumpe, einem Wärmetauscher und einem Expander aufweist. Erfindungsgemäß ist dabei das Arbeitsfluid des Energierückgewinnungssystems einem Abgasnachbehandlungssystem des Verbrennungsmotors als Reduktionsmittel zuführbar.

Die Erfinder der vorliegenden Erfindung haben sich dabei die Erkenntnis zu Nutze gemacht, dass Energierückgewinnungssysteme mit organischen Arbeitsfluiden betreibbar sind, welche gleichzeitig als Reduktionsmittel für ein Abgasnachbehandlungssystem dienen können.

Dies hat zum einen den Vorteil, dass die Vorbehandlung des Reduktionsmittels zumindest teilweise im Energierückgewinnungssystem erfolgen kann. Weiterhin kann der gleiche Tank bzw. Speicher sowohl für das Energierückgewinnungssystem, als auch für das Abgasnachbehandlungssystem eingesetzt werden.

In einer bevorzugten Ausführung der vorliegenden Erfindung handelt es sich dabei bei dem Arbeitsfluid des Energierückgewinnungssystems um Ammoniak und / oder eine wässrige Lösung von Ammoniak.

Ammoniak bzw. eine wässrige Lösung von Ammoniak stellt dabei aufgrund seiner thermodynamischen Eigenschaften ein sehr attraktives Arbeitsmedium für ein Energierückgewinnungssystem dar. Weiterhin wird Ammoniak bzw. eine wässrige Lösung von Ammoniak auch in Katalysatoren insbesondere zur Reduktion von Stickoxiden eingesetzt. Die erfindungsgemäße Kombination aus Energierückgewinnungssystem und Abgasnachbehandlungssystem macht sich dies zu Nutze.

In einer bevorzugten Ausführungsform der vorliegenden Erfindung wird das Arbeitsfluid dem Energierückgewinnungssystem an einer Stelle entnommen, an welcher es als Gas vorliegt. Durch die Entnahme des Arbeitsfluides in gasförmiger Form kann auf eine entsprechende Aufbereitung zur Verwendung im Energierückgewinnungssystem verzichtet werden.

Die vorliegende Erfindung kommt bevorzugt bei einem Energierückgewinnungssystem zum Einsatz, bei welchem das Arbeitsfluid von der Pumpe bedruckt wird und im Wärmetauscher Abwärme des Verbrennungsmotors aufnimmt, wodurch es in den gasförmigen Zustand wechselt. Das gasförmige Medium expandiert dann im Expander unter Abgabe von mechanischer Energie, bevor es in einem nachgeschalteten Kondensator rekondensiert.

Erfindungsgemäß wird das Arbeitsfluid dem Energierückgewinnungssystem dabei an einer Stelle nach dem Expander und vor dem Kondensator entnommen. Hier hat das Arbeitsfluid einen relativ geringen Druck und liegt dennoch gasförmig vor.

Erfindungsgemäß weist das Antriebssystem dabei bevorzugt eine Ventilanordnung zur Steuerung der Entnahme des Arbeitsfluides aus dem Fluidkreislauf des Energierückgewinnungssystems und / oder zur Steuerung der Zugabe des Arbeitsfluides zum Abgasnachbehandlungssystem auf. Beispielsweise kann dabei in der Verbindungsleitung, welche vom Fluidkreislauf des Energierückgewinnungssystems zum Abgasnachbehandlungssystem führt, ein Steuerventil vorgesehen sein. Weiterhin kann das erfindungsgemäße Antriebssystem einen zwischen dem Energierückgewinnungssystem und dem Abgasnachbehandlungssystem angeordneten Druckregler und/oder Druckminderer umfassen, welcher den Druck des Arbeitsfluides aus dem Fluidkreislauf des Energierückgewinnungssystems vor der Zuführung zum Abgasnachbehandlungssystem verringert.

Dabei kann der Druck des Arbeitsfluides nach dem Expander bspw. zwischen 1,5 Bar und 10 Bar liegen, bevorzugt zwischen 2 und 7 Bar. Bevorzugt wird dieser Druck durch den Druckregler auf einen Druck zwischen 0,5 Bar und 1,4 Bar, bevorzugt zwischen 1 Bar und 1,3 Bar verringert. Hierdurch wird die Zuführung des Arbeitsfluides zum Abgasrückgewinnungssystem erleichtert.

Bevorzugt wird bei dem erfindungsgemäßen Antriebssystem das Arbeitsfluid des Energierückgewinnungssystems dem Abgas stromaufwärts des Abgasnachbehandlungssystems zugegeben. Besonders bevorzugt erfolgt die Zugabe dabei, wie bereits oben dargestellt, in gasförmigem Zustand des Arbeitsfluides.

In einer bevorzugten Ausführungsform weist der Fluidkreislauf des Energierückgewinnungssystems einen Tank bzw. Speicher auf, aus welchem die Pumpe das Arbeitsfluid entnimmt.

Weiterhin bevorzugt weist der Speicher bzw. Tank ein Füllvolumen auf, welches ausreicht, um das Arbeitsfluid im Abgasnachbehandlungssystem ohne ein Nachfüllen über eine längere Betriebsdauer des Verbrennungsmotors einzusetzen. Beispielsweise kann das Arbeitsfluid dabei nach Ablauf bestimmter Serviceintervalle vom Kundendienst nachgefüllt werden.

Bevorzugt ist der Wärmetauscher des erfindungsgemäßen Energierückgewinnungssystems an das Abgassystem des Verbrennungsmotors angeschlossen.

Die vorliegende Erfindung umfasst in einem zweiten Aspekt weiterhin ein Antriebssystem mit einem Verbrennungsmotor, einem Energierückgewinnungssystem zur Rückgewinnung von Energie aus der Abwärme des Verbrennungsmotors, wobei das Energierückgewinnungssystem einen Fluidkreislauf mit einer Pumpe, einem Wärmetauscher und einem Expander aufweist, und einem Abgasnachbehandlungssystem. Erfindungsgemäß ist dabei vorgesehen, dass der Wärmetauscher des Energierückgewinnungssystems und das Abgasnachbehandlungssystem eine Baueinheit bilden.

Beide Bauteile befinden sich dabei im heißen Abgasstrom und sind entsprechend isoliert, um Strahlungsverluste zu vermeiden. Durch die Integration der beiden Bauteile lässt sich Isolationsmaterial sowie Bauraum einsparen. Insbesondere weisen dabei das Abgasnachbehandlungssystem sowie der Wärmetauscher eine zusammenhängende Isolation auf.

Das Antriebssystem gemäß dem zweiten Aspekt wird durch die vorliegende Anmeldung auch unabhängig von dem ersten Aspekt der vorliegenden Erfindung unter Schutz gestellt. In einer bevorzugten Ausführungsform sind jedoch beide Aspekte miteinander kombiniert.

Die vorliegende Erfindung umfasst in einem dritten Aspekt weiterhin ein Antriebssystem mit einem Verbrennungsmotor, einem Energierückgewinnungssystem zur Rückgewinnung von Energie aus der Abwärme des Verbrennungsmotors, wobei das Energierückgewinnungssystem einen Fluidkreislauf mit einer Pumpe, einem Wärmetauscher und einem Expander aufweist, und einem Abgasnachbehandlungssystem. Erfindungsgemäß ist der Wärmetauscher dabei stromaufwärts des Abgasnachbehandlungssystems angeordnet, wobei ein steuerbarer Bypass für den Wärmetauscher vorgesehen ist.

Bevorzugt ist dabei eine Steuerung vorgesehen, welche in Abhängigkeit von der Temperatur des Abgases den Abgasstrom durch den Wärmetauscher ansteuert.

Insbesondere kann dabei bei niedrigen Temperaturen der Abgasstrom unter Umgehung des Wärmetauschers direkt zum Abgasnachbehandlungssystem geführt werden. Bei höheren Temperaturen kann der Abgasstrom dagegen durch den Wärmetauscher zum Abgasnachbehandlungssystem geführt werden. Hierdurch wird sichergestellt, dass sich die Temperatur des Katalysators für in einem optimalen Betriebspunkt befindet.

Beispielsweise kann dabei bei der Abgasstrom bei einer Temperatur unter einem Schwellwert zwischen 200°C und 300°C unter Umgehung des Wärmetauschers direkt zum Abgasnachbehandlungssystem und über dem Schwellwert durch den Wärmetauscher zum Abgasnachbehandlungssystem geführt werden.

Das Antriebssystem gemäß dem dritten Aspekt wird durch die vorliegende Anmeldung auch unabhängig von dem ersten und zweiten Aspekt der vorliegenden Erfindung unter Schutz gestellt.

Der Wärmetauscher kann dabei bei einem Antriebssystem gemäß dem ersten und dem zweiten Aspekt stromaufwärts und / oder stromabwärts des Abgasnachbehandlungssystems im Abgasstrom angeordnet sein.

In einer ersten Ausführungsform ist dabei der Wärmetauscher gemäß dem dritten Aspekt stromaufwärts des Abgasnachbehandlungssystems im Abgasstrom angeordnet.

In einer zweiten Ausführungsform ist der Wärmetauscher dagegen stromabwärts des Abgasnachbehandlungssystems angeordnet. Hierdurch kann das Abgasnachbehandlungssystem auch ohne eine Steuerung des Abgasstroms in möglichst vielen Betriebsphasen mit einer ausreichenden Temperatur betrieben werden.

Besonders bevorzugt handelt es sich bei dem Abgasnachbehandlungssystem gemäß einem der obigen Aspekte um einen Katalysator. Insbesondere handelt es sich dabei um einen NOX-Katalysator, welcher das im Abgas enthaltene NOX unter Zuhilfenahme des Reduktionsmittels in Stickstoff umwandelt. Insbesondere handelt es sich dabei um einen SCR-Katalysator.

Die vorliegende Erfindung umfasst neben dem erfindungsgemäßen Antriebssystem aus einem Verbrennungsmotor, einem Energierückgewinnungssystem und einem Abgasnachbehandlungssystem weiterhin eine Kombination aus einem Energierückgewinnungssystem und einem Abgasnachbehandlungssystem für ein solches Antriebssystem. Bevorzugt ist dabei eine Fluidleitung vorgesehen, über welche Arbeitsfluid aus dem Fluidkreislauf des Energierückgewinnungssystems zum Abgasnachbehandlungssystem geführt werden kann.

Bevorzugt sind Energierückgewinnungssystem und / oder Abgasnachbehandlungssystem dabei so aufgebaut, wie dies bereits oben im Hinblick auf das Antriebssystem dargestellt wurde.

Die vorliegende Erfindung umfasst weiterhin ein verfahrbares Arbeitsgerät und/oder Fahrzeug mit einem Antriebssystem, wie es oben beschrieben wurde.

Dabei kann das Antriebssystem vorteilhafterweise zum Antrieb eines Fahrwerks und/oder einer Arbeitsausrüstung des verfahrbaren Arbeitsgeräts und/oder des Fahrzeugs dienen.

Weiterhin kann vorgesehen sein, dass das Antriebssystem eine oder mehrere Hydraulikpumpen eines Hydrauliksystems antreibt.

Die vorliegende Erfindung wird nun anhand von Ausführungsbeispielen und Zeichnungen näher beschrieben. Dabei zeigen:
- Fig. 1:: ein Ausführungsbeispiel eines Antriebssystems gemäß dem ersten Aspekt der vorliegenden Erfindung,
- Fig. 2:: ein Ausführungsbeispiel einer Kombination aus einem Abgasnachbehandlungssystem und einem Wärmetauscher gemäß dem zweiten Aspekt der vorliegenden Erfindung, und
- Fig. 3:: ein Ausführungsbeispiel einer Kombination aus Wärmetauscher und Abgasnachbehandlungssystem gemäß dem dritten Aspekt der vorliegenden Erfindung.

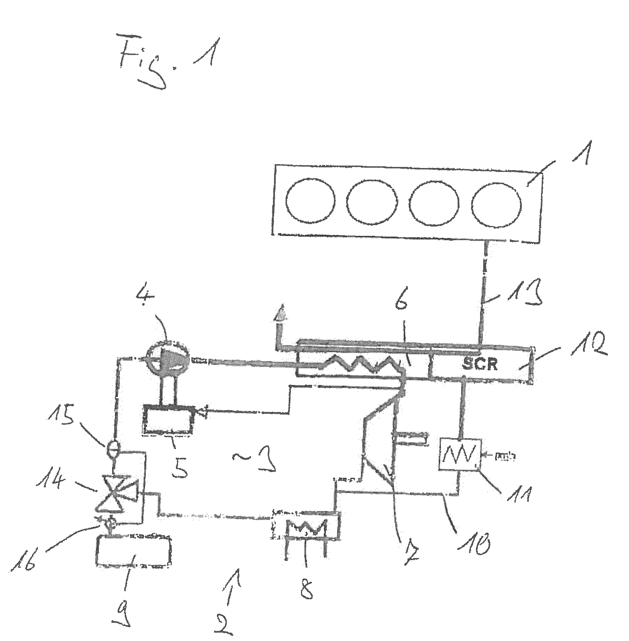

Die drei Aspekte der vorliegenden Erfindung können bei einem Antriebssystem zum Einsatz kommen, wie es im Ausführungsbeispiel anhand von Fig. 1 näher erläutert werden soll.

Das Antriebssystem weißt dabei einen Verbrennungsmotor 1, insbesondere einen Dieselmotor auf. Um die Abwärme des Verbrennungsmotors zu nutzen, ist weiterhin ein Energierückgewinnungssystem 2 vorgesehen. Das Energierückgewinnungssystem 2 weißt dabei ein Fluidkreislauf 3 aus einer Pumpe 4, einem Wärmetauscher 6, einem Expander 7 und einem Kondensator 8 auf.

Das Arbeitsmedium im Fluidkreislauf 3 des Energierückgewinnungssystems 2 nimmt dabei im Wärmetauscher 6 Abwärme auf und wechselt hierdurch in den gasförmigen Zustand. Das gasförmige Medium expandiert dann im Expander 4 unter Abgabe von mechanischer Energie.

Der Kondensator 8 sorgt dabei für eine Rekondensierung des gasförmigen Mediums, welches dann ggf. unter Zwischenschaltung eines Tanks zur Pumpe zurück fließt. Die Pumpe 2 erhöht den Druck des Arbeitsfluides vor dem Eintritt in den Wärmetauscher 6 und sorgt für eine Zirkulation des Mediums im Fluidkreislauf 3.

Die vom Energierückgewinnungssystem erzeugte mechanische Energie kann dabei in die vom Verbrennungsmotor 1 erzeugte mechanische Energie eingekoppelt werden. Hierzu können die Abtriebswellen des Expanders 7 und des Verbrennungsmotors 1 beispielsweise über ein Getriebe und/oder eine Kupplung miteinander gekoppelt sein.

Die Pumpe 4 im Energierückgewinnungssystem 2 wird dabei über einen Motor 4 angetrieben. Dabei kann eine Steuerung vorgesehen sein, welche das Energierückgewinnungssystem durch Ansteuerung der Pumpe 4 bzw. des Motors 5 in Abhängigkeit von einem oder mehreren Eingangsparametern ansteuert.

Insbesondere kann das Energierückgewinnungssystem dabei in Abhängigkeit von Betriebsparametern des Verbrennungsmotors 1 und/oder in Abhängigkeit von Betriebsparametern des Energierückgewinnungssystems selbst angesteuert werden. Beispielweise wenn der Motor 5 dabei in Abhängigkeit von dem Druck und/oder der Temperatur des Arbeitsfluides an einer Stelle im Fluidkreislauf, insbesondere an einer Stelle zwischen dem Wärmetauscher 6 und dem Expander 7, angesteuert werden.

Dabei kann das Energierückgewinnungssystem insbesondere nach dem Klausius-Rankine-Prinzip arbeiten. Bevorzugt wird dabei ein organisches Arbeitsfluid für das Energierückgewinnungssystem 2 eingesetzt.

Der Aufbau und die Ansteuerung des erfindungsgemäßen Energierückgewinnungssystems 2 kann dabei weiterhin so erfolgen, wie dies in der EP 2527635A2 gezeigt ist.

Das Antriebssystem gemäß der vorliegenden Erfindung umfasst weiterhin ein Abgasnachbehandlungssystem 12. Dabei handelt es sich im Ausführungsbeispiel um einen Katalysator zur NOx-Reduktion, und insbesondere um einen SCR-Katalysator.

Das Abgasnachbehandlungssystem 12 steht dabei über den Abgasführungskanal 13 mit dem Verbrennungsmotor 1 in Verbindung.

Bei dem Antriebssystem gemäß der vorliegenden Erfindung ist dabei bevorzugt eine Reduktionsmittelzuführung zur Zuführung von Reduktionsmitteln in das Abgas vorgesehen, wobei dieses Reduktionsmittel im Abgasnachbehandlungssystem 12 zur Reduktion von NOx eingesetzt wird.

Gemäß dem ersten Aspekt der vorliegenden Erfindung wird dabei ein Teil des Arbeitsfluides aus dem Fluidkreislauf des Energierückgewinnungssystems entnommen und dem Abgasnachbehandlungssystem des Verbrennungsmotors als Reduktionsmittel zugeführt.

Die Erfinder der vorliegenden Erfindung haben dabei erkannt, dass Energierückgewinnungssysteme mit organischen Arbeitsfluiden betreibbar sind, welche gleichzeitig als Reduktionsmittel für das Abgasnachbehandlungssystem dienen können. Insbesondere kann dabei als Arbeitsfluid bzw. Reduktionsmittel Ammoniak oder eine wässerige Lösung von Ammoniak eingesetzt werden.

Hierdurch ist nur noch ein einziger Tank bzw. Speicher 9 notwendig, in welchem das Arbeitsfluid sowohl für das Energierückgewinnungssystem, als auch für das Abgasnachbehandlungssystem gespeichert wird.

Bevorzugt entnimmt die Pumpe 4 des Energierückgewinnungssystems dabei das Arbeitsfluid aus dem Tank bzw. Speicher 9 und zirkuliert wie oben beschrieben im Fluidkreislauf des Energierückgewinnungssystems. Soweit das Arbeitsfluid dabei nicht zur Zuführung zum Abgasnachbehandlungssystem aus dem Fluidkreislauf 3 des Energierückgewinnungssystems entnommen wird, fließt dieses in den Tank 9 zurück oder zirkuliert unmittelbar weiter im Fluidkreislauf 3.

Soweit es die Druckverhältnisse im Fluidkreislauf zulassen, kann dabei der Tank bzw. Speicher 9 in den Fluidkreislauf zwischen Kondensator 8 und Pumpe 4 eingefügt werden.

Im hier gewählten Ausführungsbeispiel stehen die Rücklaufleitung vom Kondensator 8 und die Zulaufleitung zur Pumpe 4 dagegen über ein Dreiecksventil 14 mit dem Tank bzw. Speicher 9 in Verbindung.

Dabei ist vor der Pumpe 4 ein Ausgleichsbehälter 15 vorgesehen, welcher für eine ausreichende Versorgung des Fluidkreislaufs sorgt. Fällt dabei der Füllstand im Ausgleichsbehälter 15 unter ein gewisses Niveau, wird entweder das Dreiecksventil 14 und/oder ein weiteres Schaltventil 16 angesteuert, um das aus dem Fluidkreislauf entnommene Arbeitsfluid durch Arbeitsfluid aus dem Tank bzw. Speicher 9 wieder aufzufüllen.

Erfindungsgemäß ist eine Verbindungsleitung 10 zum Abgasnachbehandlungssystem vorgesehen, durch welche Arbeitsfluid aus dem Energierückgewinnungssystem entnommen und dem Abgasnachbehandlungssystem zugeführt werden kann.

In einer vorteilhaften Ausgestaltung der vorliegenden Erfindung ist die Verbindungsleitung 10 dabei so geführt, dass das als Reduktionsmittel dienende Arbeitsfluid dem Abgasstrom stromaufwärts des Abgasnachbehandlungssystems zugegeben. Bevorzugt wird das Arbeitsfluid aus dem Fluidkreislauf weiterhin an einer Stelle entnommen, an welcher es in gasförmiger Form vorliegt. Hierdurch kann auf eine entsprechende Aufbearbeitung zur gasförmigen Einbringung in den Abgasstrom verzichtet werden.

In der Erfindung wird das Arbeitsfluid dabei an einer Stelle zwischen dem Expander 7 und dem Kondensator 8 entnommen. Dort ist das Arbeitsfluid gasförmig, liegt jedoch mit einem relativ geringen Druck zwischen ca. 2 und 5 Bar vor. Da die Zuführung des Reduktionsmittels zum Abgasnachbehandlungssystem jedoch bevorzugt mit einem Druck zwischen 1 und 1,2 Bar erfolgt, ist in der Verbindungsleitung 10 eine Anordnung zur Verminderung des Druckes vorgesehen. Dabei kann es sich beispielsweise um ein Druckregelventil handeln.

Weiterhin ist in der Verbindungsleitung 10 ein nicht dargestelltes Steuerventil vorgesehen, über welches die dem Abgasnachbehandlungssystem zugeführte Reduktionsmittelmenge angesteuert werden kann.

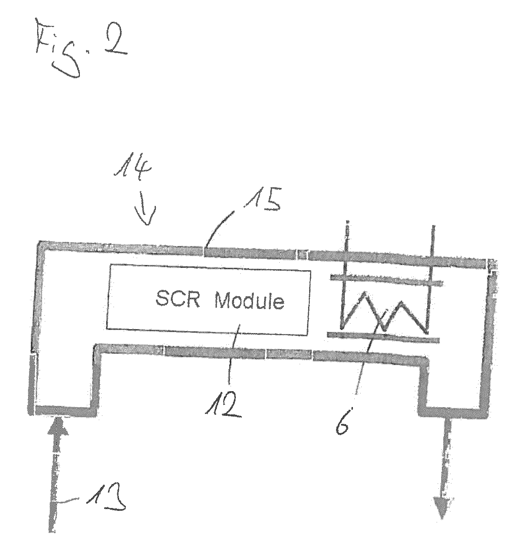

In Fig. 2 ist ein zweiter Aspekt der vorliegenden Erfindung dargestellt, wie er bevorzugt in Kombination mit dem ersten Aspekt, jedoch auch unabhängig von diesem eingesetzt werden kann.

Dabei sind der Wärmetauscher 6 des Energierückgewinnungssystems und das Abgasnachbehandlungssystem 12, d.h. das SRC-Moduls, seriell im Abgasstrom 19 angeordnet. Da sich damit beide Bauteile im heißen Abgasstrom befinden, müssen sie entsprechend isoliert werden, um Strahlungsverluste zu vermeiden. Erfindungsgemäß bilden dabei das Abgasnachbehandlungssystem 12 und der Wärmetauscher 6 des Energierückgewinnungssystems eine Baueinheit. Insbesondere weisen das Abgasnachbehandlungssystem 12 und der Wärmetauscher 6 dabei eine gemeinsame Isolation 15 auf. Durch die Integration des Wärmetauschers in das Abgasnachbehandlungssystem lässt sich somit Isolationsmaterial und Bauraum einsparen.

Im Ausführungsbeispiel in Fig. 2 ist der Wärmetauscher 6 dabei stromabwärts des Abgasnachbehandlungssystems 12 angeordnet. Im Prinzip wäre jedoch auch eine umgekehrte Anordnung innerhalb des Kombinationsbauteils denkbar.

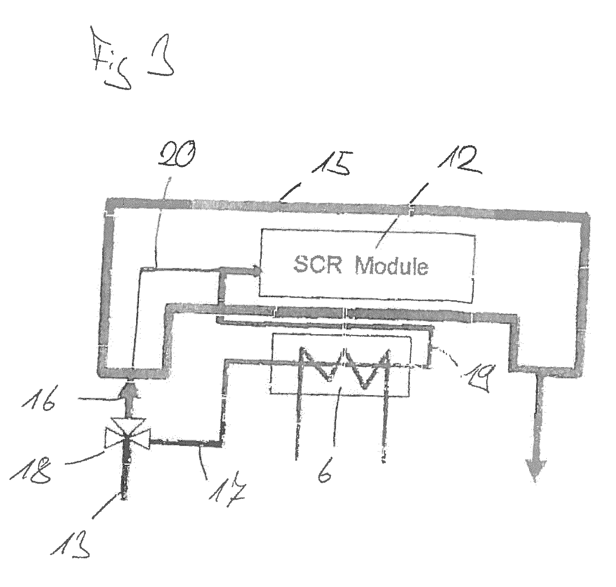

Fig. 3 zeigt dabei eine Kombination aus einem Wärmetauscher 6 für das Energierückgewinnungssystem und einem Abgasnachbehandlungssystem 12 gemäß dem dritten Aspekt der vorliegenden Erfindung. Dabei ist der Wärmetauscher 6 des Energierückgewinnungssystems so mit dem Abgasstrang 13 verbunden, dass das Abgas wahlweise unter Umgehung des Wärmetauschers 6 direkt zum Abgasnachbehandlungssystem 12, oder durch den Wärmetauscher 6 zum Abgasnachbehandlungssystem 12 fließen kann. Hierfür steht die Abgaszuführung 17 des Wärmetauschers 6 mit dem Abgasstrang 13 des Verbrennungsmotors über ein Ventil 18 in Verbindung. Ist dieses geöffnet, fließt Abgas durch den Wärmetauscher 6 und die Rückführleitung 19 zum Eingang des Abgasnachbehandlungssystems 12. Weiterhin ist ein Bypass 20 für den Wärmetauscher 6 vorgesehen, durch welchen das Abgas von der Abgasleitung 13 direkt zum Abgasnachbehandlungssystem 12 fließen kann. Das Ventil 18 ist dabei als Dreiecksventil ausgeführt und steuert den Abgasstrom durch den Wärmetauscher 6 und den Bypass 20.

Bevorzugt wird das Ventil 18 dabei temperaturabhängig angesteuert, insbesondere anhand eines Signals eines Abgas-Temperatursensors. Bei niedrigen Temperaturen des Abgasstroms wird dieser unter Umgehung des Wärmetauschers 6 direkt zum Abgasnachhandlungssystem 12 geführt, um die Temperatur des Abgases vor dem Eintritt in das Abgasnachbehandlungssystem nicht nochmals herabzusetzen. Bei höheren Temperaturen kann der Abgasstrom dagegen zunächst durch den Wärmetauscher 6 und dann zum Abgasnachbehandlungssystem geführt werden.

Beispielsweiße kann dabei das Abgas unterhalb einer Temperatur von ca. 250° C direkt zum Abgasnachbehandlungssystem geführt werden, damit das Abgasnachbehandlungssystem mit einem optimalen Umsetzungsgrad arbeiten kann. Bei höheren Temperaturen kann die im Abgasnachbehandlungssystem nicht benötigte Energie dagegen dem Wärmetauscher 6 des Energierückgewinnungssystems zugeführt und hierdurch rekuperiert werden.

Die erfindungsgemäße Kombination aus einem Wärmetauscher und einem Abgasnachbehandlungssystem gemäß dem dritten Aspekt erlaubt damit eine optimale Ausnutzung der Wärmeenergie vor dem Abgasnachbehandlungssystem, ohne die Effizienz des Abgasnachbehandlungssystems zu verringern. Die Energie kann dabei je nach Motorbetriebspunkt (d.h. Abgastemperatur und/oder Abgasmassenstrom) entweder zuerst an den Wärmetauscher oder direkt zum Abgasnachbehandlungssystem gesendet werden.

Bei dem in Fig. 3 gezeigten Ausführungsbeispiel eines Antriebssystems gemäß dem dritten Aspekt der vorliegenden Erfindung sind das Abgasnachbehandlungssystem 12 und der Wärmetauscher 6 dabei als separate Baugruppen ausgeführt. Es ist jedoch auch eine Kombination mit dem zweiten Aspekt der vorliegenden Erfindung denkbar, so dass auch bei dem dritten Aspekt der Wärmetauscher 6 und das Abgasnachbehandlungssystem 12 eine Baueinheit bilden. Bevorzugt verläuft in diesem Fall auch der Bypass 20 innerhalb der gemeinsamen Isolierungshülle für den Wärmetauscher 6 und das Abgasnachbehandlungssystem 12.

Die Ausführung der vorliegenden Erfindung gemäß dem zweiten und dritten Aspekt kann dabei bevorzugt mit der Ausführung gemäß dem ersten Aspekt, bei welchem das Arbeitsfluid des Energierückgewinnungssystems gleichzeitig als Reduktionsmittel für das Abgasnachbehandlungssystem eingesetzt wird, kombiniert werden.

## Patentansprüche

1. Antriebssystem mit einem Verbrennungsmotor (1) und einem Energierückgewinnungssystem (2) zur Rückgewinnung von Energie aus der Abwärme des Verbrennungsmotors (1), wobei
das Energierückgewinnungssystem (2) einen Fluidkreislauf (3) mit einer Pumpe (4), einem Wärmetauscher (6) und einem Expander (7) aufweist, und
das Arbeitsfluid des Energierückgewinnungssystems (2) einem Abgasnachbehandlungssystem (12) des Verbrennungsmotors (1) als Reduktionsmittel zuführbar ist,
**dadurch gekennzeichnet, dass**
das Arbeitsfluid dem Energierückgewinnungssystem (2) an einer Stelle nach dem Expander (7) und vor dem Kondensator (8) zum Zuführen an das Abgasnachbehandlungssystem (12) entnommen wird.

2. Antriebssystem nach Anspruch 1, wobei es sich bei dem Arbeitsfluid des Energierückgewinnungssystems um Ammoniak und/oder eine wässrige Lösung von Ammoniak handelt.

3. Antriebssystem nach Anspruch 1 oder 2, wobei das Arbeitsfluid dem Energierückgewinnungssystem an einer Stelle entnommen wird, an welcher es als Gas vorliegt.

4. Antriebssystem nach einem der vorangegangenen Ansprüche, mit einer Ventilanordnung (11) zur Steuerung der Entnahme des Arbeitsfluids aus dem Fluidkreislauf (3) des Energierückgewinnungssystems und/oder der Zugabe des Arbeitsfluids zum Abgasnachbehandlungssystem (12).

5. Antriebssystem nach einem der vorangegangenen Ansprüche, mit einen zwischen dem Energierückgewinnungssystem und dem Abgasnachbehandlungssystem angeordneten Druckregler (11) und/oder Druckminderer, welcher den Druck des Arbeitsfluids aus dem Fluidkreislauf (3) des Energierückgewinnungssystem vor der Zuführung zum Abgasnachbehandlungssystem (12) verringert.

6. Antriebssystem nach einem der vorangegangenen Ansprüche, wobei das Arbeitsfluid des Energierückgewinnungssystems (2) dem Abgasstrang (13) stromaufwärts des Abgasnachbehandlungssystems (12) zugegeben wird.

7. Antriebssystem nach einem der vorangegangenen Ansprüche, wobei der Wärmetauscher (6) des Energierückgewinnungssystems an das Abgassystem des Verbrennungsmotors (1) angeschlossen ist.

8. Antriebssystem insbesondere nach einem der vorangegangenen Ansprüchen mit
einem Verbrennungsmotor, einem Energierückgewinnungssystem zur Rückgewinnung von Energie aus der Abwärme des Verbrennungsmotors, wobei das Energierückgewinnungssystem einen Fluidkreislauf mit einer Pumpe, einem Wärmetauscher und einem Expander aufweist, und
einem Abgasnachbehandlungssystem,
**dadurch gekennzeichnet, dass**
der Wärmetauscher des Energierückgewinnungssystems und das Abgasnachbehandlungssystem eine Baueinheit bilden.

9. Antriebssystem insbesondere nach Anspruch 7 oder 8, mit einem Verbrennungsmotor, einem Energierückgewinnungssystem zur Rückgewinnung von Energie aus der Abwärme des Verbrennungsmotors, wobei das Energierückgewinnungssystem einen Fluidkreislauf mit einer Pumpe, einem Wärmetauscher und einem Expander aufweist, und einem Abgasnachbehandlungssystem,
**dadurch gekennzeichnet, dass**
der Wärmetauscher (6) stromaufwärts des Abgasnachbehandlungssystems (12) angeordnet ist, wobei bevorzugt ein steuerbarer Bypass (16) für den Wärmetauscher (6) vorgesehen ist.

10. Antriebssystem nach Anspruch 9, mit einer Steuerung, welche in Abhängigkeit von der Temperatur des Abgases den Abgasstrom durch den Wärmetauscher ansteuert.

11. Antriebssystem nach Anspruch 7 oder 8, wobei der Wärmetauscher (6) stromabwärts des Abgasnachbehandlungssystems (12) angeordnet ist.

12. Kombination aus einem Energierückgewinnungssystem (2) und einem Abgasnachbehandlungssystem (12) für ein Antriebssystem nach einem der vorangegangenen Ansprüche.

13. Verfahrbares Arbeitsgerät und/oder Fahrzeug mit einem Antriebssystem nach einem der vorangegangenen Ansprüche, wobei das Antriebssystem vorteilhafterweise zum Antrieb eines Fahrwerks und/oder einer Arbeitsausrüstung dient, und/oder wobei das Antriebssystem eine Hydraulikpumpe eines Hydrauliksystems antreibt.

## Claims

1. A drive system having an internal combustion engine (1) and an energy recovery system (2) for the recovery of energy from the waste heat of the internal combustion engine (1), wherein
the energy recovery system (2) has a fluid circuit (3) having a pump (4), a heat exchanger (6) and an expander (7); and
the working fluid of the energy recovery system (2) can be supplied as a reducing agent to an exhaust gas aftertreatment system (12) of the internal combustion engine (1),
**characterized in that**
the working fluid is removed from the energy recovery system (2) at a point downstream of the expander (1) and upstream of the condenser (8) for supply to the exhaust gas aftertreatment system (12).

2. A drive system in accordance with claim 1, wherein
the working fluid of the energy recovery system is ammonia and/or an aqueous solution of ammonia.

3. A drive system in accordance with claim 1 or claim 2, wherein
the working fluid is removed fro the energy recovery system at a point at which it is present as a gas.

4. A drive system in accordance with one of the preceding claims, comprising a valve arrangement (11) for controlling the removal of the working fluid from the fluid circuit (3) of the energy recovery system and/or for controlling the addition of the working fluid to the exhaust gas aftertreatment system (12).

5. A drive system in accordance with one of the preceding claims, comprising a pressure regulator (11) and/or pressure reducer which is arranged between the energy recovery system and the exhaust gas aftertreatment system and which reduces the pressure of the working fluid (3) from the fluid circuit (3) of the energy recovery system before the supply to the exhaust gas aftertreatment system (12).

6. A drive system in accordance with one of the preceding claims, wherein
the working fluid of the energy recovery system (2) is added to the exhaust tract (13) upstream of the exhaust gas aftertreatment system (12).

7. A drive system in accordance with one of the preceding claims, wherein
the heat exchanger (6) of the energy recovery system is connected to the exhaust system of the internal combustion engine (1).

8. A drive system, in particular in accordance with one of the preceding claims, comprising
an internal combustion engine; an energy recovery system for recovering energy from the waste heat of the internal combustion engine, wherein the energy recovery system has a fluid circuit having a pump, a heat exchanger and an expander; and
an exhaust gas aftertreatment system,
**characterized in that**
the heat exchanger of the energy recovery system and the exhaust gas aftertreatment system form a construction unit.

9. A drive system, in particular in accordance with claim 7 or claim 8, comprising an internal combustion engine; an energy recovery system for recovering energy from the waste heat of the internal combustion engine, wherein the energy recovery system has a fluid circuit having a pump, a heat exchanger and an expander; and an exhaust gas aftertreatment system,
**characterized in that**
the heat exchanger (6) is arranged upstream of the exhaust gas aftertreatment system (12), with a controllable bypass (16) for the heat exchanger (6) preferably being provided.

10. A drive system in accordance with claim 9, comprising a control which controls the exhaust gas flow through the heat exchanger in dependence on the temperature of the exhaust gas.

11. A drive system in accordance with claim 7 or claim 8, wherein
the heat exchanger (6) is arranged downstream of the exhaust gas aftertreatment system (12).

12. A combination of an energy recovery system (2) and an exhaust gas aftertreatment system (12) for a drive system in accordance with one of the preceding claims.

13. A movable piece of working equipment and/or a vehicle having a drive system in accordance with one of the preceding claims, wherein the drive system advantageously serves the driving of a chassis and/or of an attachment; and/or wherein the drive system drives a hydraulic pump of a hydraulic system.

## Revendications

1. Système d'entraînement comprenant un moteur à combustion interne (1) et un système de récupération d'énergie (2) destiné à récupérer de l'énergie de la chaleur dissipée du moteur à combustion interne (1), dans lequel
le système de récupération d'énergie (2) comporte un circuit de fluide (3) doté d'une pompe (4), d'un échangeur de chaleur (6) et d'une turbine de détente (7), et
le fluide actif du système de récupération d'énergie (2) peut être alimenté dans un système de post-traitement des gaz d'échappement (12) du moteur à combustion interne (1) en tant qu'agent réducteur,
**caractérisé en ce que**
le fluide actif est prélevé du système de récupération d'énergie (2) à un emplacement situé après la turbine de détente (7) et avant le condenseur (8) pour l'alimentation dans le système de post-traitement des gaz d'échappement (12).

2. Système d'entraînement selon la revendication 1, dans lequel le fluide actif du système de récupération d'énergie est de l'ammoniac et/ou une solution aqueuse de l'ammoniac.

3. Système d'entraînement selon la revendication 1 ou 2, dans lequel le fluide actif est prélevé du système de récupération d'énergie à un emplacement où il se trouve sous forme gazeuse.

4. Système d'entraînement selon l'une des revendications précédentes, comprenant un agencement de vannes (11) destiné à commander le prélèvement du fluide actif dans le circuit de fluide (3) du système de récupération d'énergie et/ou l'addition du fluide actif dans le système de post-traitement des gaz d'échappement (12).

5. Système d'entraînement selon l'une des revendications précédentes, comprenant un régulateur de pression (11) et/ou un réducteur de pression, disposé entre le système de récupération d'énergie et le système de post-traitement des gaz d'échappement, qui diminue la pression du fluide actif issu du circuit de fluide (3) du système de récupération d'énergie avant de l'alimenter dans le système de post-traitement des gaz d'échappement (12).

6. Système d'entraînement selon l'une des revendications précédentes, dans lequel
le fluide actif du système de récupération d'énergie (2) est ajouté dans la ligne d'échappement (13) en amont du système de post-traitement des gaz d'échappement (12).

7. Système d'entraînement selon l'une des revendications précédentes, dans lequel
l'échangeur de chaleur (6) du système de récupération d'énergie est relié au système d'échappement du moteur à combustion interne (1).

8. Système d'entraînement selon l'une des revendications précédentes comprenant
un moteur à combustion interne, un système de récupération d'énergie destiné à récupérer de l'énergie de la chaleur dissipée du moteur à combustion interne, le système de récupération d'énergie comportant un circuit de fluide doté d'une pompe, d'un échangeur de chaleur et d'une turbine de détente, et
un système de post-traitement des gaz d'échappement,
**caractérisé en ce que**
l'échangeur de chaleur du système de récupération d'énergie et le système de post-traitement des gaz d'échappement forment un ensemble.

9. Système d'entraînement en particulier selon la revendication 7 ou 8, comprenant un moteur à combustion interne, un système de récupération d'énergie destiné à récupérer de l'énergie de la chaleur dissipée du moteur à combustion interne, le système de récupération d'énergie comportant un circuit de fluide doté d'une pompe, d'un échangeur de chaleur et d'une turbine de détente, et comprenant un système de post-traitement des gaz d'échappement, **caractérisé en ce que**
l'échangeur de chaleur (6) est disposé en amont du système de post-traitement des gaz d'expansion (12), une dérivation (16) qui peut être commandée étant de préférence prévue pour l'échangeur de chaleur (6).

10. Système d'entraînement selon la revendication 9, comprenant un dispositif de commande, qui commande le flux de gaz d'échappement à travers l'échangeur de chaleur en fonction de la température des gaz d'échappement.

11. Système d'entraînement selon la revendication 7 ou 8, dans lequel l'échangeur de chaleur (6) est disposé en aval du système de post-traitement des gaz d'échappement (12).

12. Combinaison d'un système de récupération d'énergie (2) et d'un système de post-traitement des gaz d'échappement (12) pour un système d'entraînement selon l'une des revendications précédentes.

13. Outil de travail mobile et/ou véhicule comprenant un système d'entraînement selon l'une des revendications précédentes, dans lequel le système d'entraînement sert de manière avantageuse à entraîner un mécanisme de déplacement et/ou un équipement de travail, et/ou dans lequel le système d'entraînement entraîne une pompe hydraulique d'un système hydraulique.
